# EUROPEAN PATENT APPLICATION

(11) **EP 1 335 235 A2**
(43) Date of publication of application: **13.08.2003**
(21) Application number: 03002927.6
(22) Date of filing: 10.02.2003
(51) Int. Cl.: G02B 27/18

(54) **A vision system using projection of figures of light**

(30) Priority: 12.02.2002 IT FE20020004; 12.02.2002 IT FE20020001 U
(71) Applicant: MARICO s.a.s di Dallara Riccardo & C., 44100 FERRARA (IT)
(72) Inventor: Dallara, Riccardo, 44100 Ferrara (IT)

(57) **Abstract**

The invention relates to a system for vision where the objects, we want to see, are illuminated by projecting on them known shapes of light, in order to observe the deformation of these light shapes caused by the conformation and position of the illuminated objects. It can be realised by using laser, and it can be used in conditions of insufficient or poor visibility in order to recognise roads and obstacles, it can be also used as system for computer vision.

## Description

The present invention relates to a system for vision, that it can be made, as an example, using laser beams, and that it has the characteristic to facilitate the acknowledgement of roads and obstacles. This vision system can be an aid for people in situations of insufficient visibility, as an example in car driving, or can be used as mode of vision in computer systems for machine vision. In both these situations, the characteristic of the present invention is to reduce the amount of information respect of a normal vision of the surrounding world. This reduction of information is however able to allow the acknowledgement of the essential elements to be able to move oneself and to avoid obstacles. In the case of a machine vision, governed by a computer, the reduction of the information, coming from the vision of the external world, allows an easier and faster elaboration of data. In a vision system, at least three elements are always present:
a) one seeing element. As an example, it can be the human eye, a television camera, a sensor, a camera, and so on;
b) a region of the space which represent the object of the vision;
c) one or more light sources

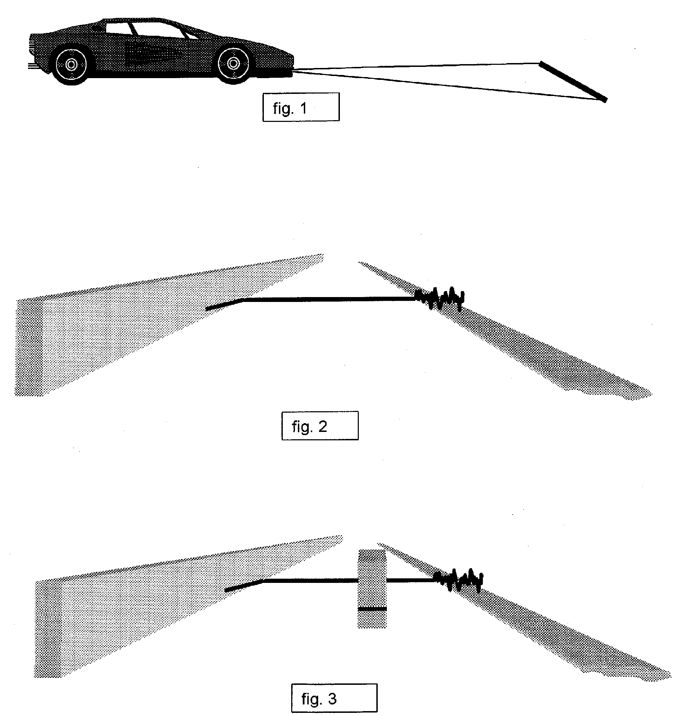

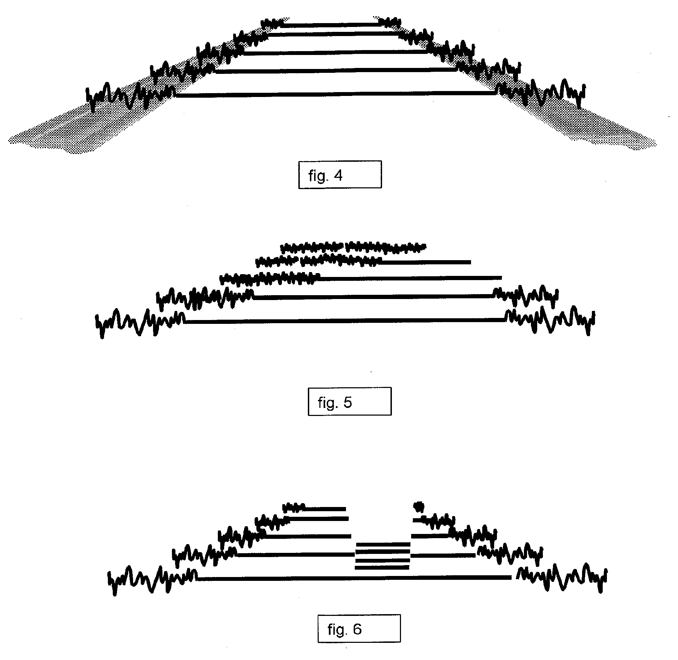

The seeing element is able to receive the light radiation, coming from the objects or because they produce this light radiation, or because they reflect and/or diffuse, to seeing element, the light radiation coming from light sources. In the vision system, that we want to explain, we want to specify nothing regarding the seeing element (a) and the objects of the vision (b), we want to leave them very vague. In this way the proposed system can be used in whichever situation of vision, human, or artificial. The present invention bases its peculiarity on the particular way to use in order to illuminate the region of space we want to see. In other words, we want to focus our attention on a particular way of lighting the objects that we want to see, with the aim to make the vision easier. Normally it is usual to light up the objects we want to see with a kind of lighting system that is the most possible uniform. This allows a perfect vision of the details because every point of the space region, that we want to see, comes hit from light. On the contrary, in the system we propose, only some zones are illuminated, using a particular criterion, with the aim to reduce drastically the information coming out from the vision process and with the aim to eliminate the disadvantages generated by a traditional lighting system. We think, for instance, about the problems caused by fog, where a traditional lighting system creates an effect like a wall. Or we can think to a system of artificial vision, where a computer must analyse all the data coming from vision and the most important problem, in terms of elaboration time, concerns the recognition of the surrounding objects and the need to eliminate, by software, all those details, that are not fundamental in the vision process that we want to do. With the lighting system, we propose, it is possible to eliminate a lot of information, coming from the vision, so as to make lighter the elaboration of the image and to make easier the process of artificial vision. In order to facilitate the description of the proposed system of vision, we will leave from a particular case of application of the same system. This way to proceed in the description does not want to limit the more general usability of the system but it wants to simplify the understanding of the same system. As possible application of the vision system, we consider the problem about the driving of means of transport, in situations of poor visibility, as it can be with fog, as an example. The most important problem caused by fog while you are driving whichever means of transport, is the so-called "wall effect". We can reassume this problem in few words: with fog the driver has difficulty to see what he has in front of him, because of the presence of the very small drops suspended in the air that constitute the fog. These small drops come between the driver and the objects that the driver wants to see. The use of headlamps in order to try to illuminate the objects in front of the vehicle involves an opposite dazzling effect on the driver. In fact, in fog absence, the light, produced by the headlamps, reaches, nearly for its entire power, the objects to illuminate, and these reflect it towards the driver, so reaching the good visibility of the same objects. As much higher is the power of the headlamps, as better visibility is for the driver. In fog presence, instead, the light, emitted from the headlamps, is partially absorbed by the suspended drops, which are between the drivers and the object to illuminate, and it is mostly reflected and diffused by the same drops so creating a "wall effect" that makes worse the drive visibility. Practically, the light emitted from the headlamps, that reaches the objects to illuminate and comes back to the eyes of leading, it is comparable, or in the worst case inferior, to the light that the fog diffuses and sends back to the eyes of the driver. On one side there would be the necessity to increase the power of the headlamps in order to illuminate better the objects, because the fog absorbs part of the light. On the other side if you increase the light of the headlamps it means that you increase the light reflected and diffused by the fog and so you make worse the visibility to the eyes of the driver. The proposed system, applied in this situation, is able to solve the problem of visibility if fog is present, starting from the considerations we have just made. We want to illuminate with an adequate luminous power the objects in front of us and we want to avoid as much as possible, the negative effect caused by the diffusion and the reflection introduced by fog. The proposed lighting system can be made using laser beams. We want to take advantage of one of the main characteristics of laser light, that is the ability to concentrate the luminous power, you want, in beams of which it is possible to control and to manage dimensions and shape. In fact, using laser, it is possible to have light beams for making writings, shapes and so on. Therefore, on one side the laser lets us to have a light power which is able to make a hole in the fog, that is to reach objects that we want to illuminate even in the case of a very dense fog and far objects. From the other side, using laser, the light can be "concentrated", so as to reduce, as much as possible, the wall effect, caused by the diffusion and reflection of the light because of fog. In order to introduce the working principle, we consider, a punctiform laser beam, that we can represent as a segment of light, that begins from the laser source and ends on the object hit by the beam. In the case of clean air, we see only a luminous point on the hit object. Instead, if there is fog, we see a light segment that begins from the laser source and ends to the hit object, because of the fog which is "illuminated" in the route covered by the laser beam. If we remove the object, that stops the laser beam, and we let the beam to go "to the infinite", then, in fog presence, we see a segment that "vanishes" within the fog. It means that, to the eyes of the observer, the luminous intensity of the segment diminishes progressively until disappearing as the beam goes away in the fog from its source. Therefore we have found a system in order to see if a light beam meets an obstacle or less in presence of fog without to incur in the effect of typical dazzle of the fog. That one as soon as described it is the main principle of the lighting system we want to use. Now, we want to propose a solution that, being based on the described principle, it can be an aid for the driver within the fog. As an example, we can use a line generator laser, that is a light beam that generates a segment if we project it on a level surface. There are various ways in order to obtain this result with a source laser, but we do not want to enter upon this subject. If we opportunely install this kind of laser source on means of transport and if we project the light on the plan of the road, we can obtain a segment of light which is orthogonal to the running (look at figure A). If the surface of the road is flat and there are no obstacles, the driver will see a regular segment. Now, if we increase the beam, that is we lengthen the segment until it reaches and exceeds the shoulders of the road, the original segment of light will endure deformations on the shoulders which depend on what it happens on the shoulders of the road. In figure B we have put an example of a road that has a wall on the left side, and it has some stones on the right side. Without regard to what it can be present at the shoulders of a road, it may be a pit, a wall, a tree, grass and so on, the laser light segment, we have projected cross-sectionally on the road, will endure some deformations. The same example could be extended to naval means of transport that enter, for example, in a port, or which is moving along a river. Looking at this segment, more or less deformed on the ends, the driver will be able to understand where they are the shoulders of the road. If now we assume that there is an obstacle in the middle of the street, and that our beam intercepts this obstacle, we will have that the segment of light, as seen by the driver, it will be deformed by the presence of the object (look at figure C). Therefore we have described a system that allows us to characterise the shoulders of the road and the obstacles, which can be present between the vehicle and the segment of light projected cross-sectionally on the road. If we put more than one of these segments of light, always orthogonal to the running direction, and they are a various distances from the vehicle, we can have a more precise vision of the status of the road. In the figure D we have shown a straight road without obstacles, in the figure E we have outlined a curve to right, in the figure F we have assumed the presence of vehicle in front of that one of the observer. We want to emphasise that the described system does not disturb the other means of transport, whether they run in the same direction or in opposite direction. Moreover it is possible to think about systems for an automatic regulation of the intensity of the beams, or for an automatic regulation of the distance from the driver of the projection of the beams on the road. It possible to think about system for an automatic regulation of the direction left right, of the beams correlated to the running speed, to the angle of sudden turn, to the density of the fog. We have used an example of possible application of the proposed system in order to describe better the system. The example shows us that we can simplify the vision for driving a means of transport, to only two essential aspects: acknowledgement of the road and acknowledgement of the obstacles. The proposed system of vision has the ability to only evidence these two aspects and succeeds to neglect all the rest. This result has been reached by choosing a particular modality, in order to illuminate the region in front of the driver. It is realised projecting on the road known shapes of light, in order to see how these are more or less deformed by the conformation of the road and by the presence of possible obstacles. If we want to generalise the description of the system, we can speak about a vision system that is based on the partial lighting of the objects to see. We can make it projecting known shapes of light on the objects (in the previous example we have used segments, but in other application it could be more useful to use light circles or other shapes). So as to reduce the vision process to the perception of deformations induced on the light shapes that we have projected; the presence and the nature of the lighted objects make these deformations. By the observation of the deformations made on the projected shapes of light it is possible to understand the shape and the displacement of the lighted objects. This kind of vision is particularly indicated in all artificial vision processes. Because if we use it, we can transform a usually bidimensional vision of the three-dimensional world (for example a photo or a photogram) to a process of monodimensional elaboration (in the example we have proposed the elaboration of segments), which is mostly Boolean (true/false). In our example it can be was translated in deformed / not deformed. The choice, about the kind of light shapes to project and about the modalities to use in this projection, it is made in function of the aspects of the vision that we want to put in evidence (in our example they were the road and the obstacles) rather than the aspects we wanted to neglect. Using the partial lighting system of the objects, by known shapes of light, and the consequent identification of the induced deformations, it is possible to concentrate the attention on the aspects of the vision that are interesting and it is possible to eliminate those one that are not interesting. So it is possible to facilitate human vision, in particular conditions, and artificial vision where a computer must elaborate the image.

## Claims

1. A vision system with the characteristic of using, as lighting system, the projection of already known light shapes, on the objects to be observed, in order to perceive the deformation of these shapes of light, in consequence of the conformation and position of the lighted objects.

2. A vision system as described in claim 1) with the characteristic of using laser as generator of the known shapes of light.

3. A vision system as described in claim 1) with the characteristic of projecting light segments on the objects to look at, in order to observe the deformations of these segments in consequence of the conformation and position of the same objects.

4. A vision system, as described in claim 1) with the characteristic of projecting light segments on a region, of the surrounding space, in order to distinguish between plane and not plane surfaces, in the illuminated zone, by the absence or presence of deformations in the vision of the same projections.

5. A vision system as described in claim 1) with the characteristic of projecting light beams on a region, of the surrounding space, in order to recognise if obstacles are present or not, by looking at the deformations made on the projected beams by the presence of the obstacles.

6. A vision system as described in claim 1) with the characteristic of allowing the recognition of roads and obstacles, in conditions of poor visibility due to fog, because it is able to eliminate the "wall effect", which is caused by old lighting systems within fog.

7. A vision system, as described in claim 1), with the characteristic of projecting light beams, with known shape, on the objects to illuminate, so that an artificial vision system can elaborate only information about the deformations in the projections of the beams. The shape and position of the lighted objects cause these deformations, with the aim to reduce drastically the amount of information that a computerised vision system must elaborate.

8. A vision system as described in claim 1) with the characteristic of being usable in machine vision systems for automatic driving of means of transport, for example robot, trolley, lift truck, cleaning machine, farm tractor, automatic means of transport, automatic surveillance and safety system, automatic rubbish collection system
